# EUROPEAN PATENT APPLICATION

(11) **EP 4 456 601 A1**
(43) Date of publication of application: **30.10.2024**
(21) Application number: 24172455.8
(22) Date of filing: 25.04.2024
(51) Int. Cl.: H04W 28/02, H04W 28/086

(54) **METHOD AND SYSTEM FOR MANAGING AN UPLINK SPLIT BEARER**

(30) Priority: 25.04.2023 IN 202321029853; 22.04.2024 US 202418641552
(71) Applicant: Mavenir Systems, Inc., Richardson, TX 75081 (US)
(72) Inventor: TANEJA, Mukesh, 560037 Bangalore (IN); S., Srinivasan, 560037 Bangalore (IN)
(74) Representative: dompatent von Kreisler Selting Werner - Partnerschaft von Patent- und Rechtsanwälten mbB

(57) **Abstract**

Described are systems and methods for updating a UL split threshold for a 4G leg and 5G leg for a number of split Data Radio Bearers (DRBs) using a Near-Real Time RIC or 5G Central Unit. A Near-Real Time RIC or 5G Central Unit subscribes to receive UL split threshold parameters from a gNB or eNB E2 node to determine whether to change the values of UL split threshold parameters for UL split DRBs. If so, the UL split threshold parameters are updated at the E2 node and communicated to the UE.

## Description

### DESCRIPTION OF THE RELATED TECHNOLOGY

### a. Field of the Disclosure

The present disclosure relates to systems and methods for radio access networks. The present disclosure is related to the design, operation, administration and management of various network elements of 4G, 5G, and further generations of a radio access network system.

### OVERVIEW OF IMPLEMENTATIONS

Described are implementations of a computer system, computer system components, a method, and computer program products configured to execute program instructions for the method for radio access network, and operation, administration and management of various network elements of 4G, 5G, and further generations of the radio access network system. The method is performed by a computer system that comprises one or more processors and a computer-readable storage medium encoded with instructions executable by at least one of the processors and operatively coupled to at least one of the processors.

In an implementation, method comprises: taking initial values for a UL split threshold for a 4G and 5G leg for a number of split Data Radio Bearers (DRBs), wherein UL split threshold parameters comprise:
an average UL buffer measure for a UE using a Buffer Status Report (BSR) provided by the UE;
   a UL data volume at a CU-UP for a DRB of the number of split DRBs;
a UL PRB utilization;
a UL Cell throughput for each UL cell;
subscribing to the UL split threshold parameters from an gNB (106) or eNB E2 node by a near-RT RIC;
detecting, by the E2 node, an RIC event trigger;
analyzing the parameters, by the near-RT RIC, to determine whether to change the values of UL split threshold parameters for some of the number of UL split DRBs, and if so;
updating the UL split threshold parameters at the E2 node; and communicating the updated UL split threshold parameters to the UE. The method can further comprise: computing the average UL buffer measure with the BSR for a UE periodically at a 5G DU for each UL split; and computing the average UL buffer measure with the BSR for a UE periodically at a 4G DU for each UL split DRB.

The method can further comprise: communicating the periodically computed the average UL buffer measure for the UE at the 5G DU for each UL split to a 5G CU-CP via an F1-C interface; and communicating the periodically computed the average UL buffer measure for the UE at the 4G DU for each UL split to the 5G CU-CP via an F1-C interface.

The method can further comprise: computing the BSR for a corresponding Logical Channel Group ID (LCG ID) in the 4G network and the 5G network, wherein the 4G DU and the 5G DU each identify the BSR in a buffer size field of the corresponding LCG ID.

The method can further comprise: mapping each of a BSR index (k) to a buffer size in a range (b1,b2] in bytes; and computing the lower value of the range; or computing an average of the range (average of b1+1 and b2) while computing average BSR.

The method can further comprise: informing, by the UE, the BSR for the 4G leg and 5G leg to the respective 4G DU and SGU; and computing the average BSR at the 4GDU and 5G DU or communicating the BSR to a near-RT-RIC and computing the average BSR at the near-RT-RIC.

An E2 protocol message can include an object for communicating the parameters from the 4G DU and the 5G DU to the near-RT-RIC.

The analyzing of the parameters, by the near-RT RIC, to determine whether to dynamically change the values of UL split threshold parameters for some of the number of UL split DRBs can comprise:
determining if a BSR average across the 4G leg and the 5G leg for the split DRB for a time interval is above a configured threshold and is high;
determining if a CU-UP data volumes for the split DRB is below a configured threshold; and
reducing the value of the UL split threshold for the DRB and communicating the reduced value to the 4G CU and the 5G CU. The method can further comprise: communicating, by the 4G CU, the reduced value to the UE.

The method can further comprise: analyzing, by the near-RT-RIC, the UL PRB utilization for 4G DU and the 5G DU and identifying the 5G leg or 4G leg where a corresponding scheduler can give the UE optimal UL data transmission.

The method can further comprise: increasing, by the near-RT RIC, the UL cell throughput when a UL CU-UP data volume starts going up for a DRB or a packet drops at CU-UP for UL cell throughput; or increasing, by the near-RT RIC, the UL cell throughput when a UL CU-UP data volume starts going up for a DRB or a packet drops at CU-UP for UL cell throughput.

The method can further comprise: communicating the increased UL cell throughput to a 4GCU, and communicating, by the 4G CU, the updated UL split threshold to the UE.

The method can further comprise: decreasing, by the near-RT-RIC, the UL split threshold for some DRBs when both a UL cell throughput of 4G a 5G cell is UL cell throughput is below a configured threshold; or decreasing, by the near-RT-RIC, the UL split threshold for some DRBs that were sending most of their data via the 5G leg when a UL cell throughput of a 5G UL cell throughput is above a configured threshold and is high and the throughput of 4G UL cell throughput is below a configured threshold and is low.

In an implementation, a method comprises: taking initial values for a UL split threshold for a 4G and 5G leg for a number of split Data Radio Bearers (DRBs), wherein UL split threshold parameters comprise one or more of:
an average UL buffer measure for a UE using a Buffer Status Report (BSR) provided by the UE;
a UL data volume at a CU-UP for a DRB of the number of split DRBs; a UL PRB utilization; and
a UL Cell throughput for each UL cell; communicating the UL split threshold parameters to a 5G CU; and
analyzing the parameters, by the 5G CU, to determine whether to change the values of UL split threshold parameters for some of the number of UL split DRBs, and if so, updating the UL split threshold parameters at the 5G CU; an communicating the updated UL split threshold parameters to the UE.

The method can further comprise: computing the average UL buffer measure with the BSR for a UE periodically at a 5G DU for each UL split; and computing the average UL buffer measure with the BSR for a UE periodically at a 4G DU for each UL split DRB.

The method can further comprise: communicating the periodically computed the average UL buffer measure for the UE at the 5G DU for each UL split to a 5G CU-CP via an F1-C interface; and communicating the periodically computed the average UL buffer measure for the UE at the 4G DU for each UL split to the 5G CU-CP via an F1-C interface.

### BRIEF DESCRIPTION OF THE DRAWINGS

Figure 1 is a block diagram of a system architecture.
Figure 2 shows an example of a User Plane Stack.
Figure 3 shows an example of a Control Plane Stack.
Figure 4A shows an example of a Separation of CU-CP (CU-Control Plane) and CU-UP (CU-User Plane).
Figure 4B shows an example of a Separation of CU-CP (CU-Control Plane) and CU-UP (CU-User Plane).
Figure 5 shows a DL (Downlink) Layer 2 Structure.
Figure 6 shows an exemplary logical flow for implementing an RB allocation policy.
Figure 7 shows an L2 Data Flow example.
Figure 8A shows an example of an O-RAN architecture.
Figure 8B shows an example of an O-RAN architecture.
Figure 9A illustrates a PDU Session architecture consisting of multiple DRBs.
Figure 9B illustrates a flow for PDU sessions, DRBs and GTP-U Tunnels across CU and DU.
Figure 9C illustrates a CU and DU view on PDU session, DRBs and GTP-U tunnels for a 5G network architecture.
Figure 10 shows a Resource Allocation MAC Scheduler, DL Data, and Flow Control Feedback for 5G Network.
Figure 11A describes an EN-DC architecture.
Figure 11B describes a NG-RAN architecture.
Figure 12A illustrates a Non-Standalone NSA architecture and logical flow.
Figure 12B illustrates a Non-Standalone NSA architecture and logical flow.

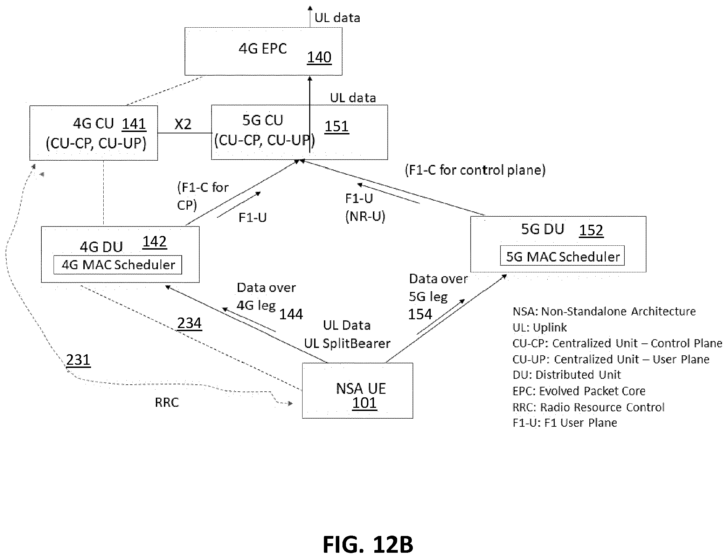

Figure 12B illustrates a Non-Standalone NSA architecture and logical flow.

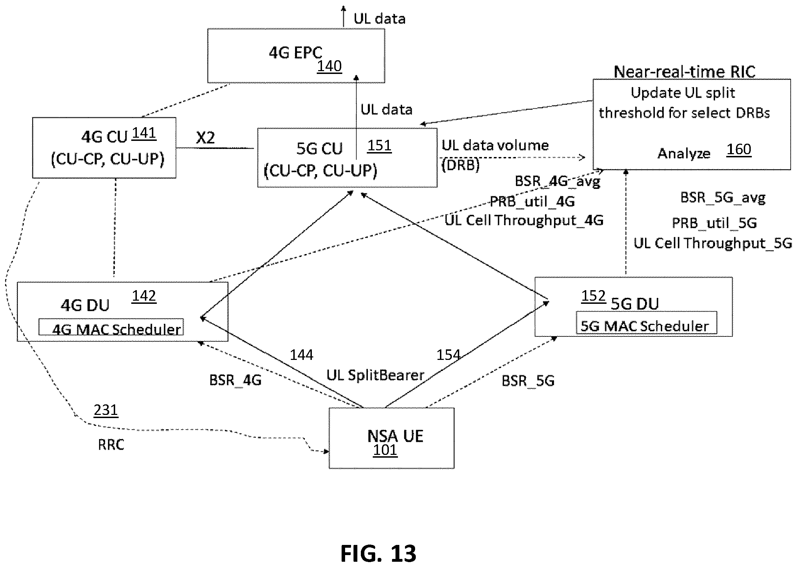

Figure 13 illustrates an example implementation of UL Split Threshold optimizations with a Near-RT-RIC.

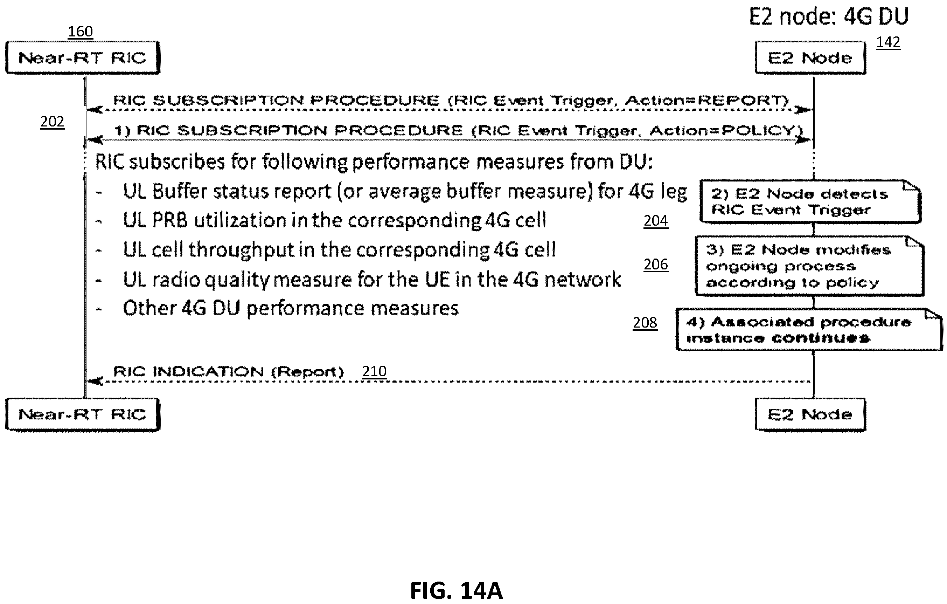

Figure 14A illustrates an exemplary flow for an implementation of UL Split Threshold optimizations with a Near-RT-RIC.

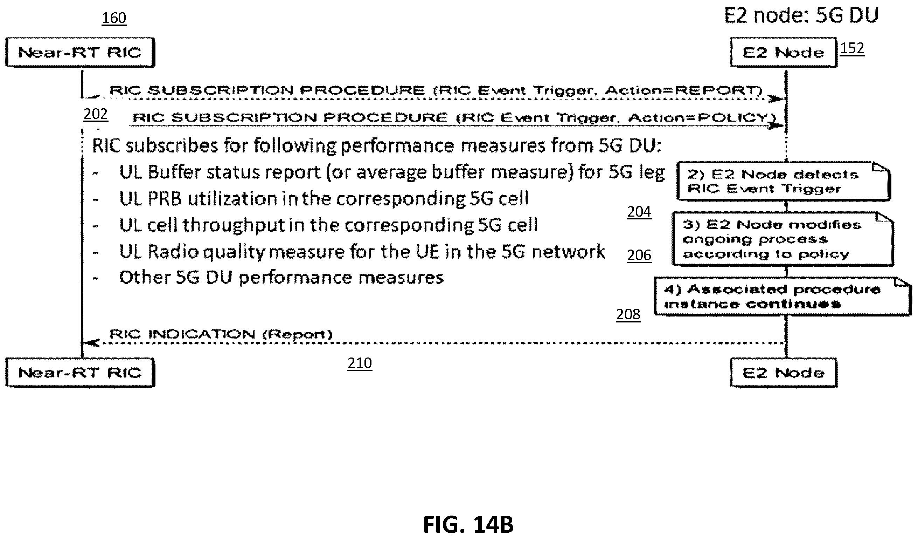

Figure 14B illustrates an exemplary flow for an implementation of UL Split Threshold optimizations with a Near-RT-RIC.

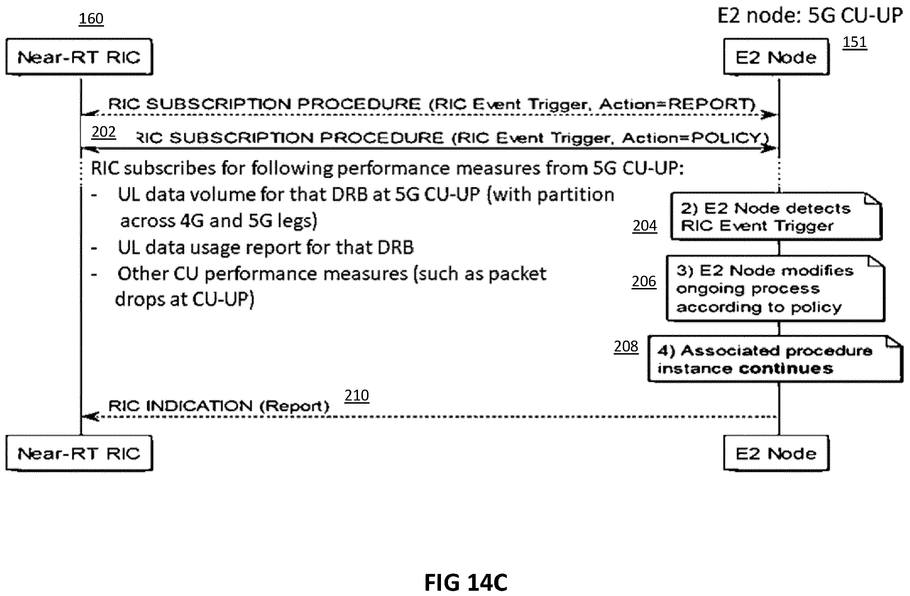

Figure 14C illustrates an exemplary flow for an implementation of UL Split Threshold optimizations with a Near-RT-RIC.

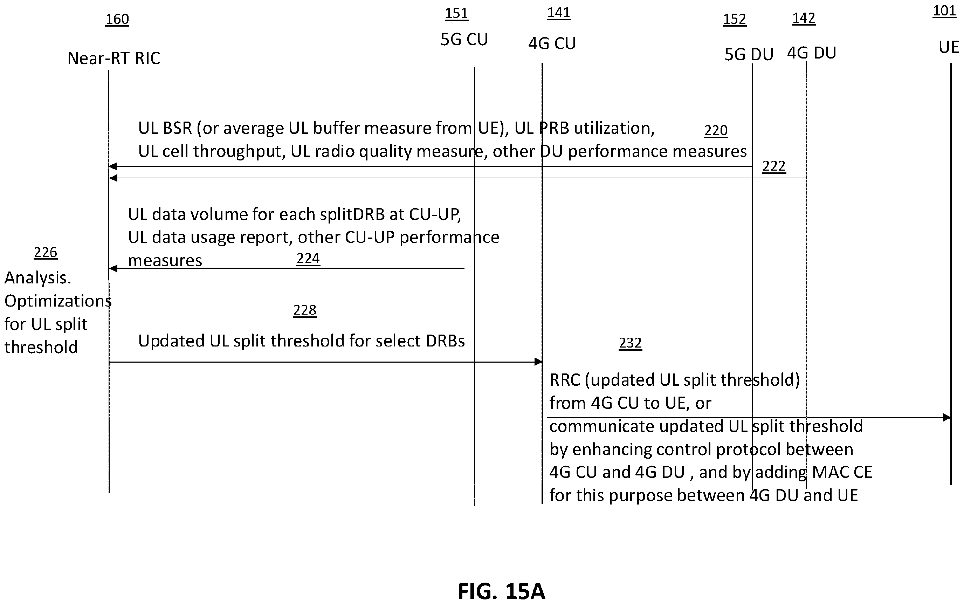

Figure 15A illustrates an exemplary flow for an implementation of UL Split Threshold optimizations with a Near-RT-RIC.

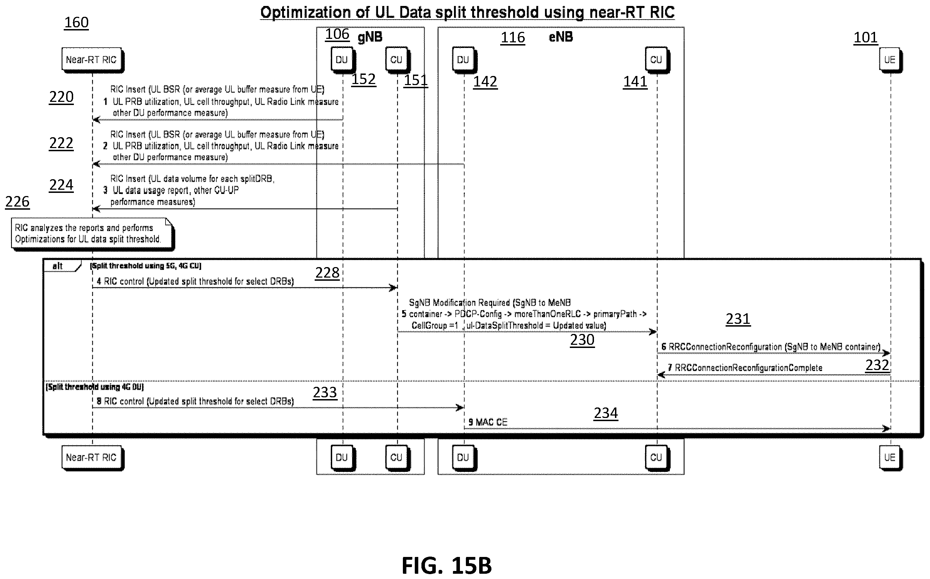

Figure 15B illustrates an exemplary flow for an implementation of UL Split Threshold optimizations with a Near-RT-RIC.

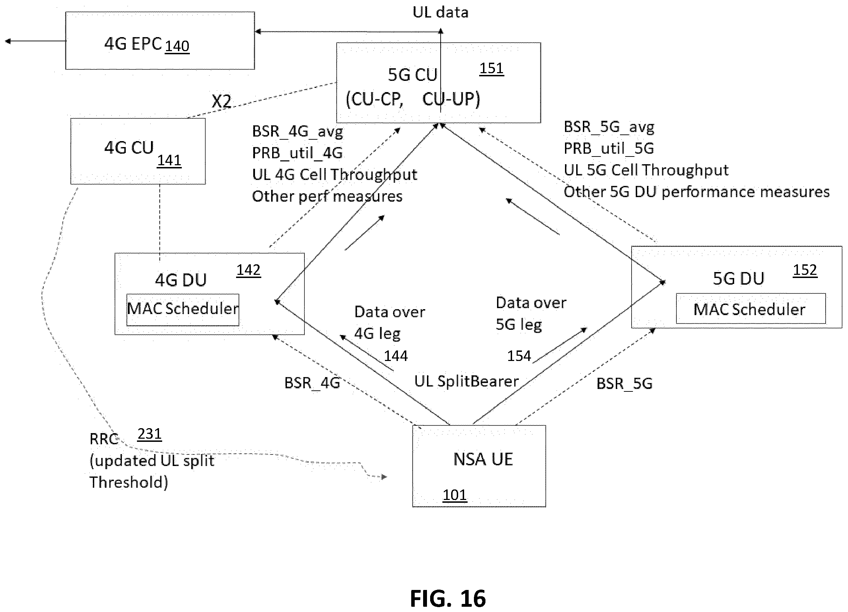

Figure 16 illustrates an example implementation of UL Split Threshold optimizations at a 5G CU.

### DETAILED DESCRIPTION OF THE IMPLEMENTATIONS

Reference is made to Third Generation Partnership Project (3GPP) and the Internet Engineering Task Force (IETF) and related standards bodies in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.
O-RAN.WG4.MP.0-R003-v13.00
3GPP TS 23.203 V 17.2.0 2021-12-23
3GPP TS 23.501 V 18.1.0 2023-04-05
3GPP TS 38.300 V 17.4.0 03-28-2023
3GPP TS 36.321 V 17.4.0 2023-03-29
3GPP TS 36.323 V 17.2.0 2023-01-13
3GPP TS 38.321 V 17.4.0 2023-03-29
3GPP TS 38.401 V 17.4.0 2023-04-03
3GPP TS 38.501 V 18.1.0 2023-04-05
3GPP TS 38.425 17.3.0, 2023-04-03

### Acronyms

3GPP: Third generation partnership project
SGC: 5G Core Network
5G NR: 5G New Radio
5QI: 5G QoS Identifier
ACK: Acknowledgement
ACLR: Gain and Adjacent Channel Leakage Ratio
ADC: Analog-to-Digital Converter
AM: Acknowledged Mode
APN: Access Point Name
ARP: Allocation and Retention Priority
ASIC: Application Specific Integrated Circuit
AWGN: Additive White Gaussian Noise
BFW: Beamforming weight
BS: Base Station
CNF: Cloud-Native Network Function
CP: Control Plane
C-RAN: cloud radio access network
CU: Centralized unit
CU-CP: Centralized Unit - Control Plane
CU-UP: Centralized Unit - User Plane
CQI: Channel Quality Indicator
DAC: Digital-to-Analog Converter
DC: Dual Connectivity
DCI: Downlink Control Information
DDDS: DL Data Delivery Status
DFE: Digital Front End
DL: Downlink
DMRS: Demodulation Reference Signal
DNN: Data Network Name
DRB: Data Radio Bearer
DU: Distributed unit
eNB: evolved Node B
eMBB: Enhanced Mobile Broadband
EPC: Evolved Packet Core
EN-DC
EP: Endpoint Pod
E-UTRA: Evolved Universal Terrestrial Radio Access
IoT: Internet of Things
IP: Internet Protocol
IWF: Interworking Function
GBR: Guaranteed Bit Rate
gNB: gNodeB (5G base station)
GTP-U: General Packet Radio Service (GPRS) Tunnelling Protocol - User Plane
GW: Gateway
HA: High Availability
L1: Layer 1
L2: Layer 2
L3: Layer 3
LC: Logical Channel
MAC: Medium Access Control
MIMO: multiple-in multiple-out
MME: Mobility Management Entity
MR-DC: Multi-Radio Dual Connectivity
M-plane: Management plane interface between SMO and O-RU
NACK: Negative Acknowledgement
NAS: Non-Access Stratum
NB: Narrowband
Near-RT RIC: Near-Real-Time RIC
NMS: Network Management System
NR: New Radio
NR-U: New Radio - User Plane
NSA: Non-Standalone Architecture
OFDM: orthogonal frequency-division multiplexing
O-RAN: Open Radio Access Network
PA: Power Amplifier
PDB: Packet Delay Budget
PDCP : Packet Data Convergence Protocol
PDU: Protocol Data Unit
PDCCH: Physical Downlink Control Channel
PDSCH: Physical Downlink Shared Channel
PHY: Physical Layer
PRG: Physical Resource block Group
PUCCH: Physical Uplink Control Channel
PUSCH: Physical Uplink Shared Channel
QCI: QoS Class Identifier
QFI: QoS Flow Id
QFI: QoS Flow Identifier
QoS : Quality of Service
RAT: Radio Access Technology
RB: Resource Block
RDI: Reflective QoS Flow to DRB Indication
RIC: RAN Intelligent Controller
RLC: Radio Link Control
RLC-AM: RLC Acknowledged Mode
RLC-UM: RLC Unacknowledged Mode
RMM: Radio resource management
RQI: Reflective QoS Indication
RRC: Radio Resource Control
RU: Radio Unit
SA: Standalone Architecture
SCTP: Stream Control Transmission Protocol
SDAP: Service Data Adaptation Protocol
S-GW: Serving Gateway
SINR: Signal-to-Interference and Noise Ratio
SMO: Service Management and Orchestration system
SN: Signal Node
SR: Scheduling Request
SRS: Sounding Reference Signal
TCP: Transmission Control Protocol
TEID: Tunnel Endpoint Identifier
U-plane: User plane
UPF: User Plane Function
UE: user equipment
UL: uplink
UM: Unacknowledged Mode
URLLC: Ultra Reliance Low Latency Communication

Described are implementations of technology for a cloud-based Radio Access Networks (RAN), where a significant portion of the RAN layer processing is performed at a central unit (CU) and a distributed unit (DU). Both CUs and DUs are also known as the baseband units (BBUs). CUs are usually located in the cloud on commercial off the shelf servers, while DUs can be distributed. while the RF and real-time critical functions can be processed in the remote radio unit (RU).

### RAN Architectures

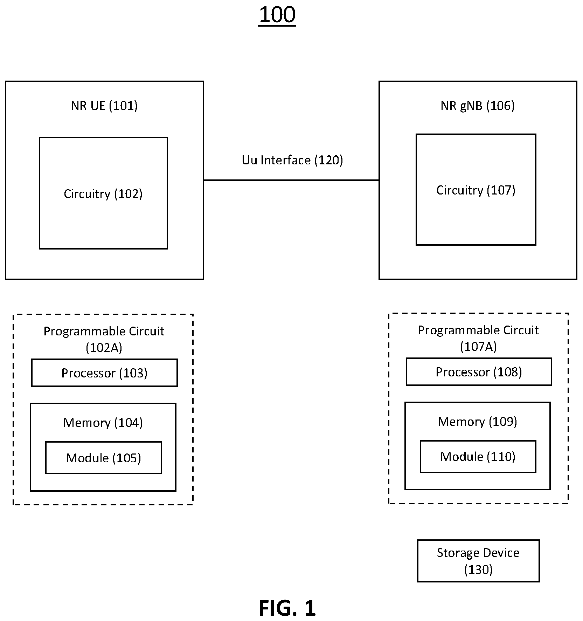

Figure 1 is a block diagram of a system 100 for implementations as described herein. System 100 includes a NR UE 101, a NR gNB 106. The NR UE and NR gNB 106 are communicatively coupled via a Uu interface 120.

NR UE 101 includes electronic circuitry, namely circuitry 102, that performs operations on behalf of NR UE 101 to execute methods described herein. Circuity 102 may be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 may be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 may be implemented in a random-access memory (RAM), a hard drive, a read only memory (ROM), or a combination thereof. One of the components of memory 109 is a program module, namely module 110. Module 110 contains instructions for controlling processor 108 to execute operations described herein on behalf of NR gNB 106.

The term "module" is used herein to denote a functional operation that may be embodied either as a stand-alone component or as an integrated configuration of a plurality of subordinate components. Thus, each of module 105 and 110 may be implemented as a single module or as a plurality of modules that operate in cooperation with one another.

While modules 110 are indicated as being already loaded into memories 109, and module 110 may be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE may be stationary or mobile. A UE includes: an access terminal, a terminal, a mobile station, a subscriber unit, a station, etc. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, etc.), an entertainment device (e.g., a music device, a video device, a satellite radio, etc.), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN may be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and may can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which may be referred to as a CRAN and/or a vBBU. In these embodiments, the CRAN or vBBU may implement a RAN function split, such as a PDCP split wherein RRC and PDCP layers are operated by the CRAN/vBBU and other L2 protocol entities are operated by individual RAN nodes; a MAC/PHY split wherein RRC, PDCP, RLC, and MAC layers are operated by the CRAN/vBBU and the PHY layer is operated by individual RAN nodes; or a "lower PHY" split wherein RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs may include one or more remote radio heads (RRH), and the gNB-CU 151may be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and may be similar to eNBs in an 3GPP architecture.

In some implementations, access to a wireless interface can be scheduled, wherein a scheduling entity (e.g.: BS, gNB, etc.) allocates bandwidth resources for devices and equipment within its service area or cell. As scheduling entity can be configured to schedule, assign, reconfigure, and release resources for one or more subordinate entities. In some examples, a UE 101 (or other device) may function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities may communicate utilizing the scheduled resources.

BS or gNB 106 may be equipped with T antennas and UE 101 may be equipped with R antennas, where in general T≥1 and R≥1. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI), etc.) and control information (e.g., CQI requests, grants, upper layer signaling, etc.) and can provide overhead symbols and control symbols. Processor 108 may also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, etc.) to obtain an output sample stream. Each modulator can further be configured to process (e.g., convert to analog, amplify, filter, and upconvert) the output sample stream to obtain a downlink signal. T downlink signals from modulators can be transmitted via T antennas.

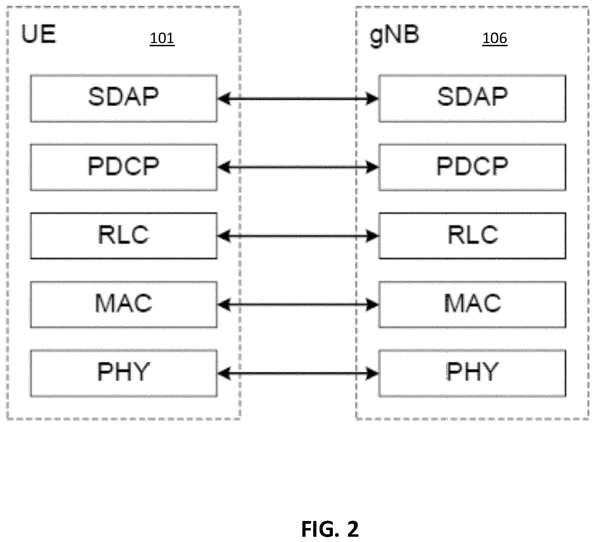

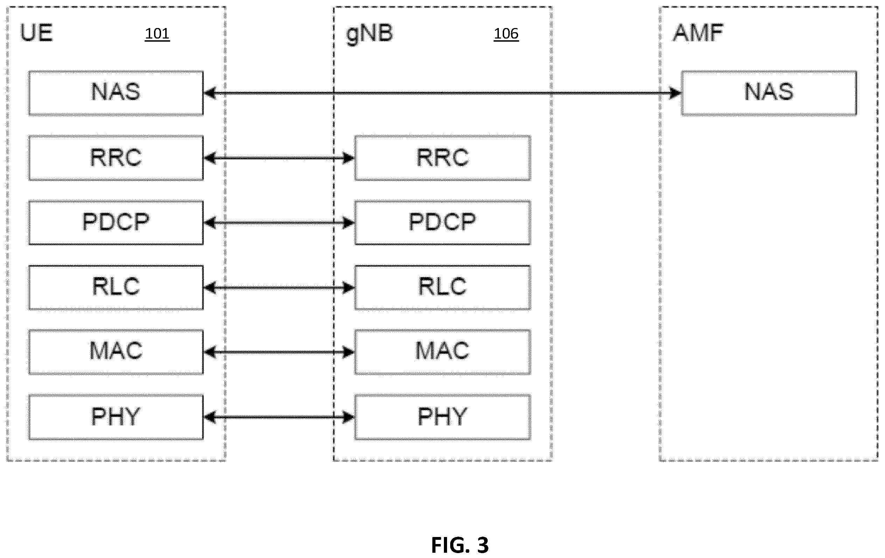

An overview of 5G NR Stacks is as follows. 5G NR (New Radio) user and control plane functions with monolithic gNB 106 are shown in the Figure1 and Figure 2 . For the user plane, PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. For the control plane, RRC (Radio Resource Control), PDCP, RLC, MAC and PHY sublayers are terminated in the gNB 106 on the network side and NAS (Non-Access Stratum) is terminated in the AMF (Access Mobility Function) on the network side. Figure 2 shows an example of a User Plane Stack as descried in 3GPP TS 38.300. Figure 3 shows an example of a Control Plane Stack as described in 3GPP TS 38.300.

An NG-RAN (NG-Radio Access Network) architecture from 3GPP TS 38.401 is described below. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

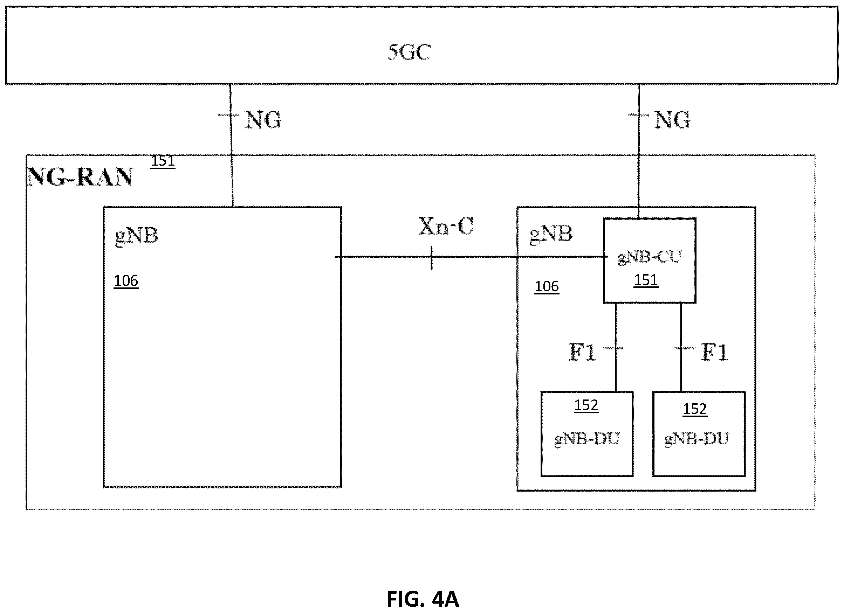

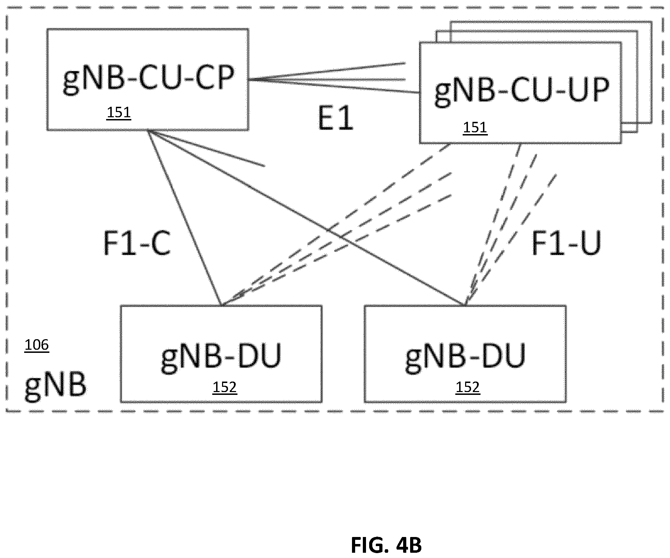

A gNB 106 may consist of a gNB-CU-CP, multiple gNB-CU-UPs and multiple gNB-DUs. The gNB-CU-CP is connected to the gNB-DU 152 through the F1-C interface and to the gNB-CU-UP through the E1 interface. The gNB-CU-UP is connected to the gNB-DU 152 through the F1-U interface and to the gNB-CU-CP through the E1 interface. One gNB-DU 152 is connected to only one gNB-CU-CP and one gNB-CU-UP is connected to only one gNB-CU-CP. Figure 4A shows an example of an NG-RAN Architecture as described in 3GPP TS 38.501. Figure 4B shows an example of a Separation of CU-CP (CU-Control Plane) and CU-UP (CU-User Plane) as described in 3GPP TS 38.401.

A Layer 2 (L2) of 5G NR is split into the following sublayers is described in 3GPP TS 38.300):
∘ Medium Access Control (MAC): The MAC sublayer offers Logical Channels (LCs) to the RLC sublayer. This layer runs a MAC scheduler to schedule radio resources across different LCs (and their associated radio bearers).
∘ Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.
∘ Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.
∘ Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink packets).

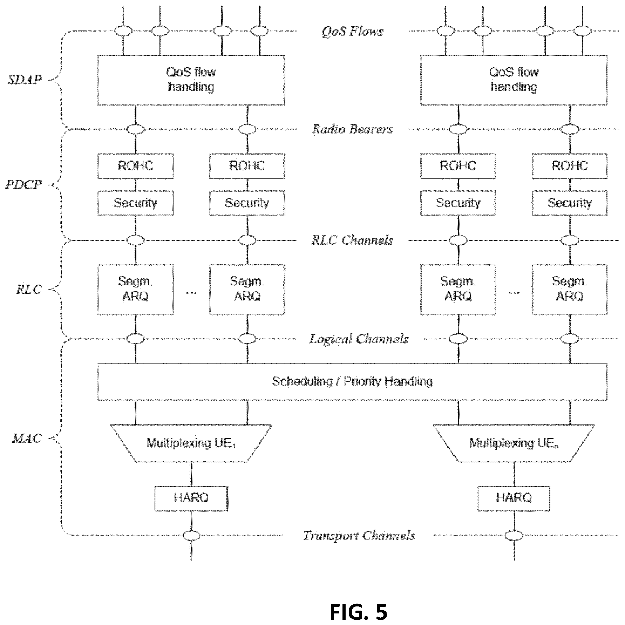

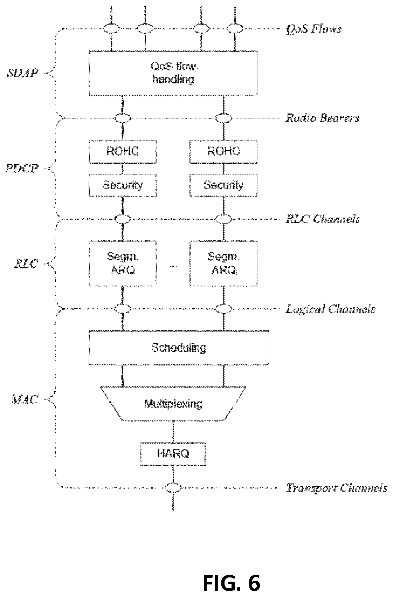

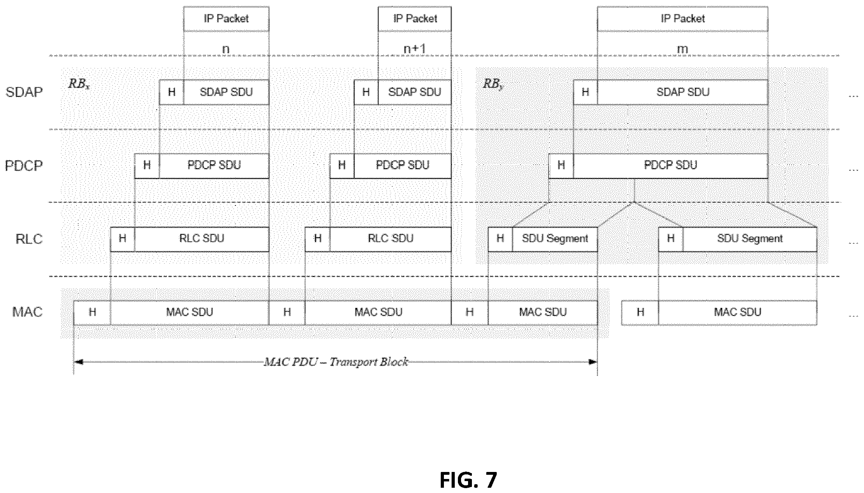

Figure 5 shows a DL (Downlink) Layer 2 Structure as described in 3GPP TS 38.300. Figure 6 shows an UL (uplink) Layer 2 Structure in accord with 3GPP TS38.300. Figure 7 shows an L2 Data Flow example in accord with 3GPP TS 38.300 ([H] denotes headers or subheaders in Figure 7.)

O-RAN, which is based on disaggregated components and connected through open and standardized interfaces is based on 3GPP NG-RAN. An overview of O-RAN with disaggregated RAN (CU, DU, and RU), near-real-time RIC 160 and non-real-time RIC is shown in the figure below. Here, DU (Distributed Unit) and CU (Centralized Unit) are typically implemented using COTS (Commercial off-the-shelf) hardware.

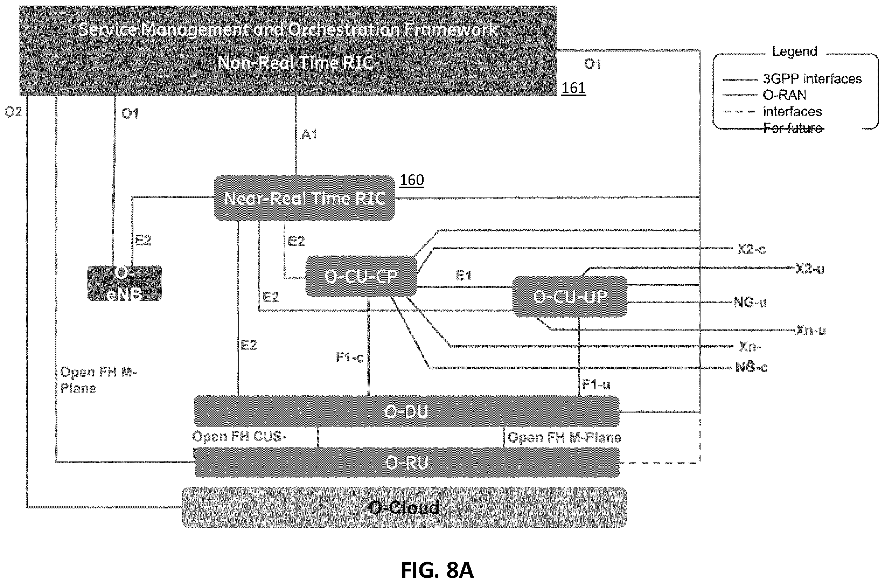

Figures 8A-8B show an example of an O-RAN architecture. In Figure 8A, the CU and the DU are connected using the F1 interface (with F1-C for control plane and F1-U for user plane traffic) over the midhaul (MH) path. One DU could host multiple cells (for example, one DU could host 24 cells) and each cell may support many users. For example, one cell may support 600 RRC Connected users and out of these 600, there may be 200 Active users (i.e.; users which have data to send at a given point of time).

A cell site could consist of multiple sectors and each sector may support multiple cells. For example, one site could consist of three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (corresponding to 100,000 UEs) may be served by five CU-UP instances (and one CU-CP instance).

DU can be located in a private data center or it could be located at a cell-site too. CU can also be located in a private data center or even hosted on a public cloud system. DU and CU can be tens of kilometers away. CU can communicate with 5G core system which could also be hosted in the same public cloud system (or could be hosted by a different cloud provider). RU (Radio Unit) is located at cell-site and communicated with DU via a fronthaul (FH) interface.

The E2 nodes (CU and DU) are connected to the near-real-time RIC 160 using the E2 interface. The E2 interface is used to send data (e.g., user, cell, slice KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

SMO manages multiple regional networks, and O-RAN NFs (O-CUs, Near-RT RIC 160, O-DUs) can be deployed in a regional data center which is connected to multiple cell sites or in cell site which is close to localized O-RU according to network requirements. Since SMO Functions and O-RAN NFs are micro services and deployment-independent logical functions, SMO Functions and O-RAN NFs can be composed of multiple deployment instances deployed in the same O-Cloud or in a different O-Cloud in regional data center, or in cell site according to network requirements (ex. capacity, latency, security, and so on) if the secure connection among SMO Functions and O-RAN NFs are available.

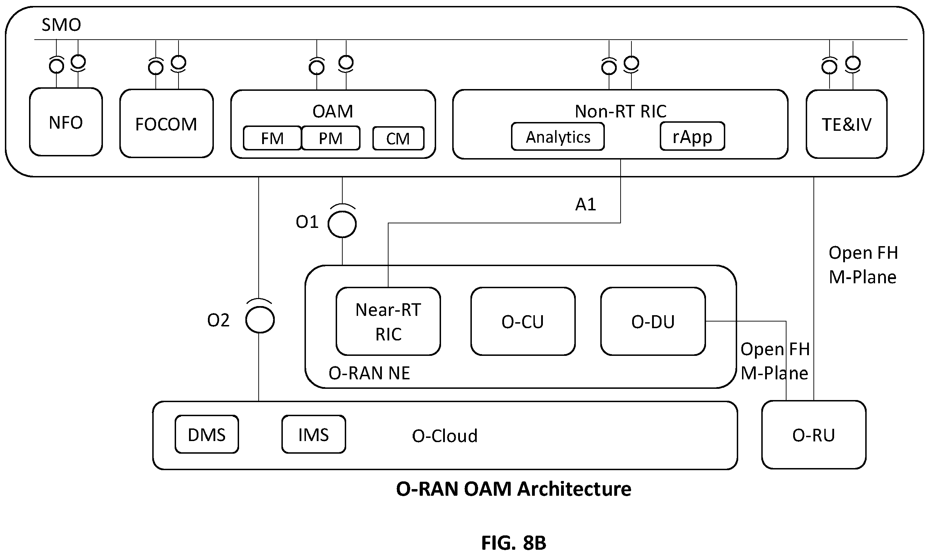

As shown in Figure 8B, an O-RAN compliant SMO defines TE&IV, RAN NF OAM, Non-RT RIC, and NFO, FOCOM services. SMO interacts with O-RAN NFs with O1 interface. SMO interacts with O-RU with Open FH M-Plane interface and interacts O-Cloud via the O2 interface. O-RAN NF OAM manages O-RAN NF CM, FM, PM and creates O-RAN NF inventory and topology in TE&IV. FOCOM/NFO manages O-Cloud resources and creates O-Cloud resources inventory and topology in TE&IV. Analytics/rApp in Non-RT RIC can subscribe O-RAN NFs PM/FM, O-Cloud PM/FM data based on O-RAN NF OAM and FOCOM/NFO. Analytics/rApp in Non-RT RIC can retrieve the O-RAN NF and O-Cloud resource inventory and topology.

### PDU Sessions, DRBs, QoS Flows

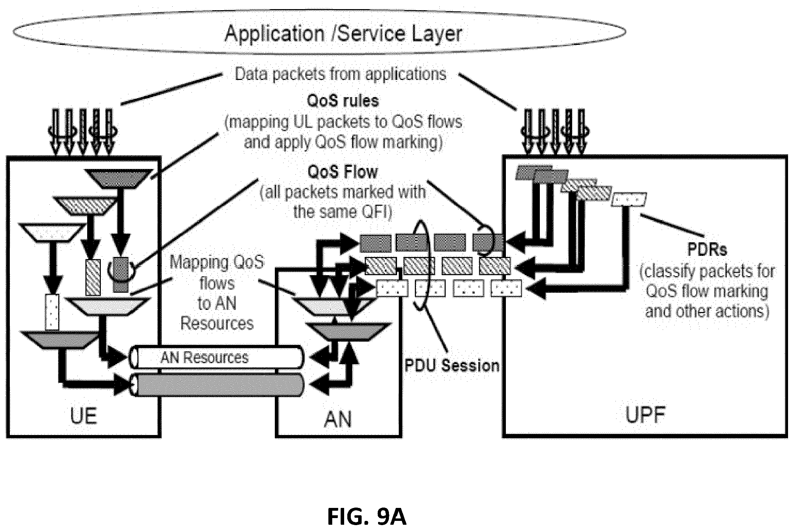

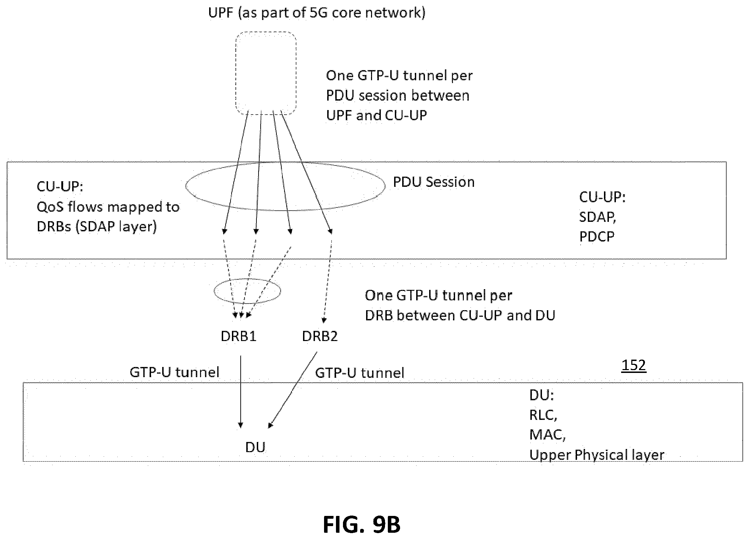

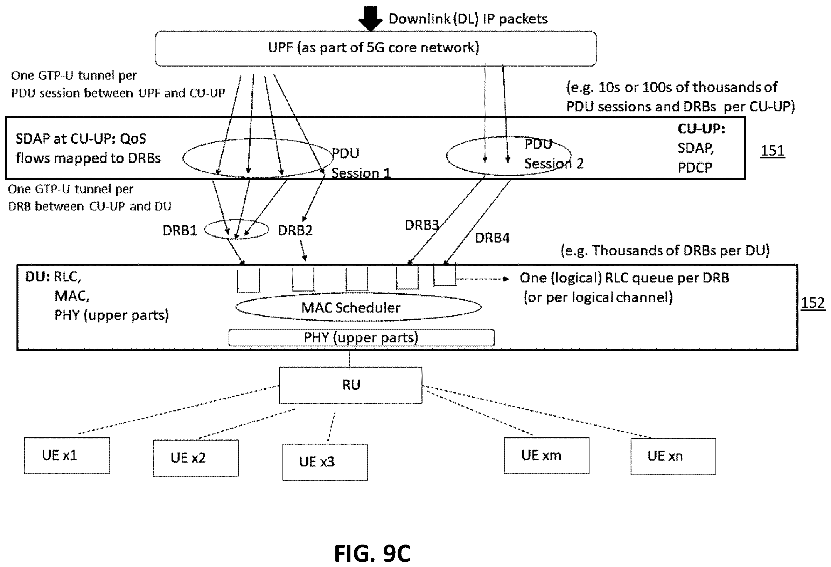

In 5G networks, PDU connectivity service is a service that provides exchange of PDUs between a UE and a data network identified by a Data Network Name (DNN). The PDU Connectivity service is supported via PDU sessions that are established upon request from the UE. This DNN defines the interface to a specific external data network. One or more QoS flows can be supported in a PDU session. All the packets belonging to a specific QoS flow have the same 5QI (5G QoS Identifier). Figure 9A illustrates a PDU Session architecture consisting of multiple DRBs. Each DRB may consist of multiple QoS flows (3GPP TS 23.501). Figure 9B illustrates a flow for PDU sessions, DRBs and GTP-U Tunnels across CU and DU. Figure 9C illustrates a CU and DU view on PDU session, DRBs and GTP-U tunnels for a 5G network architecture.

As shown in Figures 9A-9C, a PDU session comprises the following:
A Data Radio Bearer (DRB) is between UE and CU in RAN and a NG-U GTP tunnel which is between CU and UPF (User Plane Function) in the core network. For the 3GPP's 5G network architecture, the transport connection between the base station (i.e., CU-UP) and User Plane Function (UPF) uses a single GTP-U tunnel per PDU session. The PDU session is identified using GTP-U TEID (Tunnel Endpoint Identifier). The transport connection between DU and CU-UP uses a single GTP-U tunnel per DRB.

### SDAP

The SDAP (Service Adaptation Protocol) Layer receives downlink data from the UPF across the NG-U interface. It maps one or more QoS Flow(s) onto a specific DRB. The SDAP header is present between the UE and the CU (when reflective QoS is enabled), and includes a field to identify the QoS flow within a specific PDU session. GTP-U protocol includes a field to identify the QoS flow and is present between CU and UPF (in the core network).

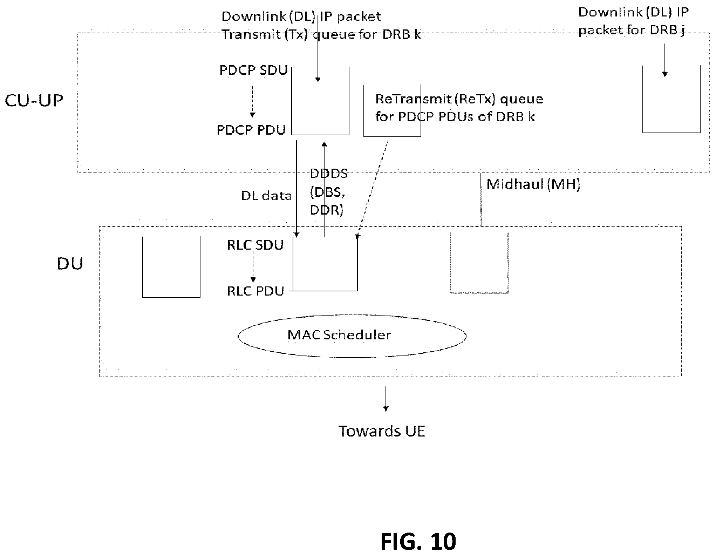

Procedures and functionality of the F1-U interface are defined in 3GPP TS 38.425. This F1-U interface supports NR User Plane (NR UP) protocol which provides support for flow control and reliability between CU-UP and DU for each DRB. Figure 10 shows a Resource Allocation (MAC Scheduler), DL Data, and Flow Control Feedback (DDDS) in 5G Networks. Downlink User Data (DUD) PDU are used to carry PDCP PDUs from CU-UP to DU for each DRB. Downlink Data Delivery Status (DDDS) PDU from DU to CU-UP. The DDDS message conveys Desired Buffer Size (DBS), Desired Data Rate (DDR) and some other parameters from DU to CU-UP for each DRB as part of flow control feedback.

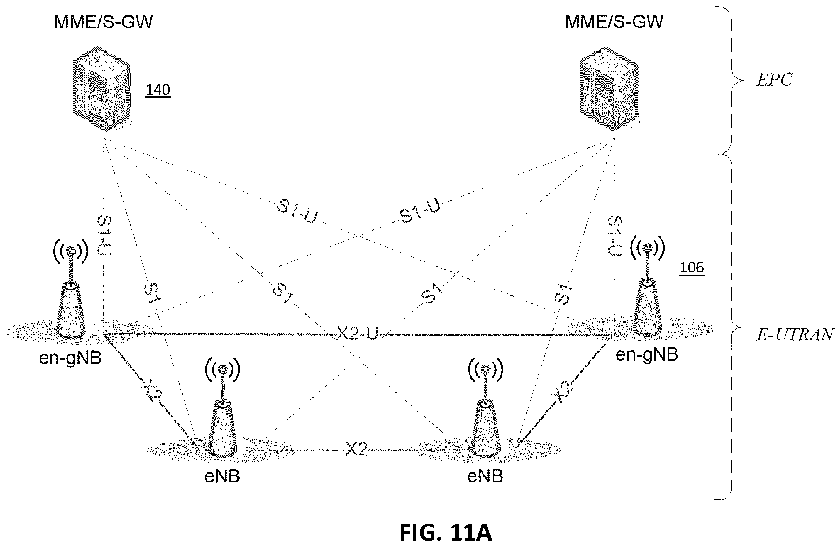

An E-UTRAN architecture is illustrated in Figure 11A. The E-UTRAN comprises of eNBs, providing the E-UTRA U-plane (PDCP/RLC/MAC/PHY) and control plane (RRC) protocol terminations towards the UE. The eNBs are interconnected with each other by means of the X2 interface. The eNBs are also connected by means of the S1 interface to the EPC (Evolved Packet Core), more specifically to the MME (Mobility Management Entity) by means of the S1-MME interface and to the Serving Gateway (S-GW) by means of the S1-U interface. The S1 interface supports a many-to-many relation between MMEs / Serving Gateways and eNBs.

E-UTRAN also supports MR-DC via E-UTRA-NR Dual Connectivity (EN-DC), in which a UE is connected to one eNB that acts as a MN and one en-gNB 106 that acts as a SN. An EN-DC architecture is illustrated in Figure 11A. The eNB is connected to the EPC 140 via the S1 interface and to the en-gNB 106 via the X2 interface. The en-gNB 106 might also be connected to the EPC 140 via the S1-U interface and other en-gNBs 106 via the X2-U interface. In EN-DC, and en-gNB 106 comprises gNB-CU 151and gNB-DU(s)152.

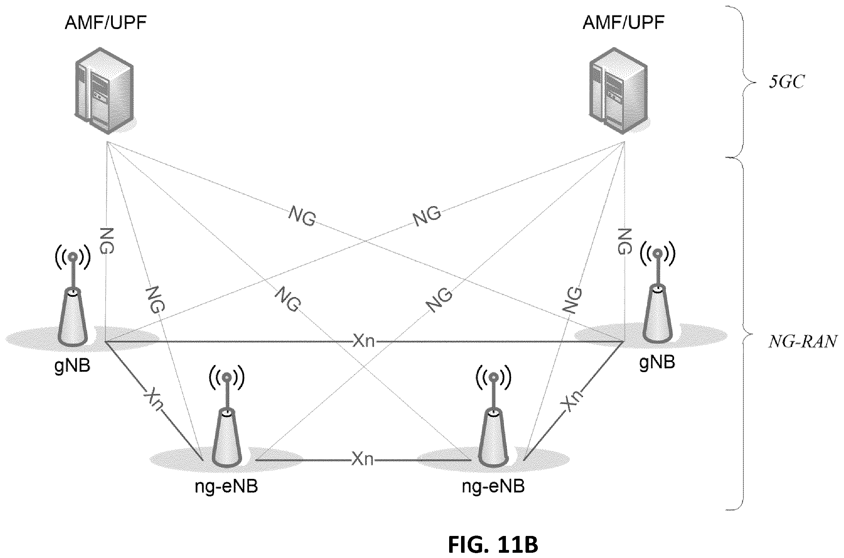

As shown in Figure 11B, in the NG-RAN architecture, an NG-RAN node is either:
a gNB, providing NR user plane and control plane protocol terminations towards the UE; or
an ng-eNB, providing E-UTRA user plane and control plane protocol terminations towards the UE. (3GPP TS 38.300 17.3.0.)

As shown in Figures 11B, the gNBs 106 and ng-eNBs are interconnected with each other by means of the Xn interface. The gNBs 106 and ng-eNBs are also connected by means of the NG interfaces to the 5GC, more specifically to the AMF (Access and Mobility Management Function) by means of the NG-C interface and to the UPF (User Plane Function) by means of the NG-U interface.

The gNB 106 and ng-eNB host functions such as functions for Radio Resource Management: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity;

In an example, control information (e.g., scheduling information) may be provided for broadcast and/or multicast operation. The UE may monitor different bundle sizes for the control channel depending on the maximum number of repetitions.

### NSA (Non-Standalone) Architecture

In the 5G Standalone (SA) architectures, 5G gNB 106 communicates with 5G Core (and not with 4G Evolved Packet Core 140). Similarly, in the 4G architecture, 4G eNB 116 communicates with 4G Evolved Packet Core (EPC) 140 and not with 5G Core.

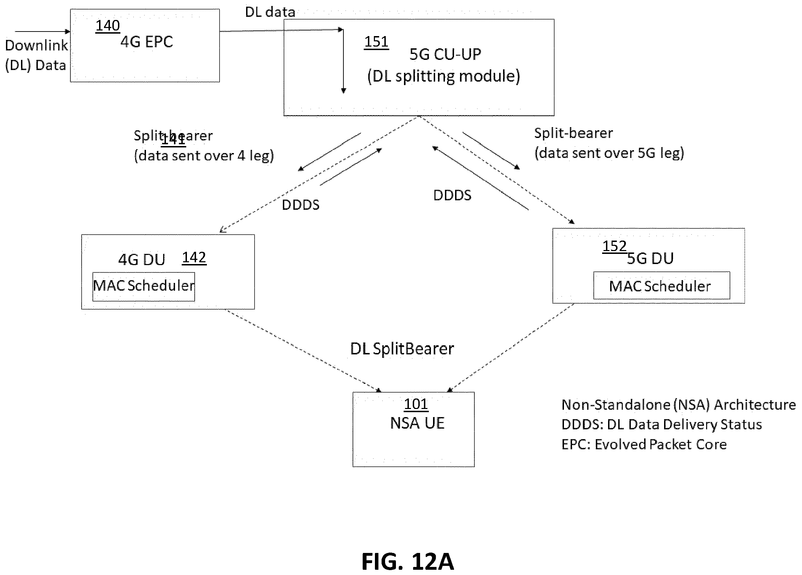

E-UTRA-NR Dual Connectivity (EN-DC) is a dominant form of the Non-Standalone (NSA) architecture. As is shown in Figure 12A, a 4G eNB 116 as well as 5G gNB 106 use 4G EPC 140 (Evolved Packet Core), and 5G core are not used in this network architecture. In the architecture below, DL (downlink) data goes from 4G EPC 140 to 5G CU-UP 151where it could be split across two different transmission paths (or network legs): 1) 5G CU-UP 151to 4G DU 142 to NSA UE and 2) 5G CU-UP 151 to 5G DU 152 to NSA UE, and combined again at the NSA UE 101. Flow control between CU-UP 151 and DU as specified in the previous section is run 1) between 5G DU 152 and 5G CU-UP 151, and 2) between 4G DU 142 and 5G CU-UP 151 in this architecture.

Figure 12B shows another UL Split bearer in NSA Architecture. In this variant of the NSA Architecture, DL data from 4G EPC 140 is first sent to 4G CU-UP 141 where it is split across two transmission paths (or network legs): 1) 4G CU-UP 141 to 4G DU 142 to NSA UE 101 and 2) 4G CU-UP 141 to 5G DU 152 to UE 101, and then combined again at the NSA UE 101. For the UL split bearer in the NSA architecture, uplink data from the UE 101 towards the 5G DU 152/4G DU 142 is split at the UE 101. After splitting, some packets are sent on the 5G leg 154 and other on the 4G leg 144 of the network.

### Description of Implementations

UL 101 splitting procedure is specified in 3GPP TS 36.323. The gNB 106 provides a threshold value, indicated as ul-DataSplitThreshold, to each UE 101 for each split DRB.

```
 UL-DataSplitThreshold ::= ENUMERATED {
 b0, b100, b200, b400, b800, b1600, b3200, b6400, b12800, b25600, b51200,
 b102400, b204800,
 b409600, b819200, b1228800, b1638400, b2457600, b3276800, b4096000,
 b4915200, b5734400,
 b6553600, infinity, spare8, spare7, spare6, spare5, spare4, spare3, spare2,
 spare1}
```

Here b100 means 100 bytes, b400 means 400 bytes and so on. If UL data accumulated at UE for a split DRB is above this threshold, UE can split data across 5G leg 154 and 4G leg 144 of the network using its own internal logic. If UL data accumulated at UE 101 is below a threshold, the UE 101 sends data for that DRB along the primary path. In general, the primary path is 5G leg 154 and secondary path is 4G leg 144 for UL split bearers.

A large number of DRBs can be sending data via a CU-UP and it becomes difficult to find good values of this threshold (i.e., ul-DataSplitThreshold) for each UL split DRB. One way to simplify is this to assign the same value of threshold for all UL split DRBs with the same 5QI (or QCI). The DRBs with the same 5QI do not necessarily send a similar amount of traffic. For example, video conferencing DRB on one UE may send 1 Mbps while another video conferencing DRB on a different UE may send 50 Mbps. Also, the UEs associated with these DRBs could experience different radio conditions. In general, it is difficult to predict the amount of UL data a UE may send or radio conditions of a UE, and thus this scheme of same (static) threshold per 5QI also does not work well. Described are implementations to provide a good solution to decide suitable values of these thresholds for a system with very large number of DRBs.

An example implementation of UL Split Threshold optimizations with RIC 160 is illustrated in Figure 13. The implementation starts with some initial values of threshold (i.e., ul-DataSplitThreshold) for each split DRB. For example, the same threshold can be employed for all DRBs with same QoS class (such as 5QI in 5G systems or QCI in 4G systems) at the time of initialization, though different initial values can be used as well. The threshold values are updated in a semi-static (or dynamic) way as described herein. Parameters for this implementation are as follows.

An average UL buffer measure for a given UE for 4G and 5G networks using the BSR (Buffer Status Report) provided by the UE 101 (BSR_5G_avg, BSR_4G_avg], The BSR indicates the amount of data that is in the UE buffer and needs to be sent out towards the base station at a given time. In the NSA case, UE wants to send data towards a CU-UP via 5G DU 152 or 4G DU 142 (or can split data towards 4G and 5G DUs). This UE 101 can send BSR separately for a 4G DU 142 and 5G DU 152 (with BSR for 4G denoted as BSR_4G and BSR for 5G denoted as BSR_5G herein). The average BSR is computed periodically at 5G DU 152 for each UL split DRB (denoted as BSR_5G_avg herein). This is communicated to 5G CU-CP via F1-C. An object is added to the F1AP protocol running over the F1-C interface for this purpose. It will be noted that F1AP, as described in 3GPP TS 38.473 (V17.4.1 2023-04-05), is the control plane protocol running over the F1-C interface between 5G CU-CP 151 and 5G DU 152. It will also be noted that one can compute weighted average BSR or arithmetic average BSR where arithmetic average is computed over a recent time interval. Implementations as described herein can work with both of these.

Similarly, average BSR is computed periodically at 4G DU 142 for each UL split DRB (denoted as BSR_4G_avg). This is communicated from 4G DU to 5G CU-CP via F1-C. The object is added in F1AP above (over the F1-C interface) is employed for this purpose as well. User plane as specified in 3GPP TS 38.425 between 4G DU and 5G CU-UP 151 can be employed. In this case, F1AP is the control plane protocol running over the F1-C interface between 4G DU and 5G CU-UP.

BSR for the corresponding Logical Channel Group ID (LCG ID) in 4G and 5G networks (to compute BSR_4G_avg and BSR_5G avg) are as follows. As specified in 3GPP TS 36.321 (and summarized in the Support Information below), three formats are defined for the 4G BSR: Short BSR, Long BSR, and Truncated BSR. Each format indicates the amount of data available in the UE for uplink communication towards 4G eNodeB for certain Logical Channel Group IDs (CG IDs). For example, the long BSR formats indicates accumulated data at UE for four LCG IDs, the short BSR format indicates this for one LCG ID, and the Truncated BSR indicates this for one LCG ID when UE has data to send for more than one LCG IDs but cannot include long BSR in the MAC PDU. The 4G eNodeB is programmed with mapping of a radio bearer (or the corresponding logical channel) to the Logical Channel Group ID (LCG ID). For finding BSR_4G in implementation described herein, the 4G DU 142 looks at the buffer size field of the LCG ID corresponding to the uplink split bearer that is described herein. Four BSR formats are specified in 3GPP TS 38.321 for 5G networks: Short BSR, Short Truncated BSR, Long BSR and Long Truncated BSR. For finding BSR_5G as described herein the 5G DU 152 looks at the buffer size field of the LCG ID corresponding to the uplink split bearer.

Each BSR index, k, maps to buffer size in the range (b1,b2], in bytes (using the tables given in 3GPP TS36.321 for 4G and TS38.321 for 5G systems). The lower value of this range is used for computing above average with this method. As an alternate option, an average of this range (i.e. average of b1+1 and b2) can be used while computing average BSR. For each UL split DRB in the system, the same method for computing average BSR is employed. For example, BSR index 34 translates to buffer size in the range (1552, 1817] bytes using the mapping table shown in Table 3.3 of the Support Information Item 1B of this document, and 1552 bytes for index 34 can be used when computing average BSR for this case. As an alternate option, the average of this range (i.e. 1685 bytes) can be used while computing average BSR.

UE 101 informs BSR for 4G and 5G legs to respective DUs. Next, average BSR is computed at these DUs, or the BSR is communicated to near-RT-RIC 160 and the average BSR is computed at near-RT-RIC 160. For this purpose, objects are added in the E2 protocol message to communicate these parameters from 4G/5G DUs to near-RT-RIC 160.

A UL data volume at CU-UP for that DRB indicates the amount of UL data that UE was allowed to send towards CU-UP. UL resource allocation mechanisms at 4G DU 142 and 5G DU 152 influence this indirectly. 3GPP has standardized data usage report IE which CU-UP (CU-User Plane) sends to CU-CP (CU-Control Plane). This data usage report IE is shown in Table 2 of Support Information IA. This is used for reporting UL data volume from CU-UP to near-RT-RIC 160 for each UL split DRB. For this purpose, suitable objects are added in the E2 protocol message to communicate these parameters from the CU-UP to near-RT-RIC 160.

UL PRB utilization (for 4G DU 142 and 5G DU) is communicated from 4G/5G DUs to near-RT-RIC 160. Objects are added to the E2 protocol to communicate these parameters.

UL Cell throughput for each cell is communicated from 4G/5G DUs to near-RT-RIC 160. Objects are added in the E2 protocol to communicate these parameters from DU to near-RT-RIC 160.

At block 202, near-RT-RIC 160 subscribes to above parameters from an E2 Node, the 4G DU 142, the 5G DU 152, or the 5G CU-UP 151, as respectively shown in Figures 14A, 14B and 14C, and is provided with these parameters as part of this process. At block 204 the E2 Node detects an RIC event trigger. At block 206, the E2 Node modifies the process as described herein. At block 208, the procedure instance at the E2 node continues. At block 210, the E2 Node reports the RIC indication to the near-RT RIC 160.

As shown in Figures 15A, at block 220 and block 222 the near-RT-RIC 160 receives the BSR and other parameters from the 5G DU 152 and the 4G DU 142 respectively. At block 224, the near-RT-RIC 160 receives UL data volume for each split DRB at CU-UP, UL data usage report, and other CU-UP performance measures. At block 226 the near-RT-RIC 160 keeps analyzing the above parameters and determines whether or not to dynamically change values of UL split threshold for some UL split DRBs. At block 228, the near-RT-RIC 160 sends updated UL split thresholds the 4G CU 141, and at block 232, the 4G CU 141 sends the updated UL split threshold to the UE via RRC message 231. Alternatively, 4G CU 141 communicates the updated UL split threshold to 4G DU 142 by adding a suitable object in the control protocol running between 4G CU and 4G DU, and 4G DU 142 sends this to UE by adding this in MAC-CE.

As shown in Figure 15B, at block 228, the near-RT-RIC 160 can send updated UL split thresholds the 5G CU 151, and at block 230, the 5G CU 151 sends the updated UL split threshold to the 4G CU 141. At block 231 The 4G CU 141 sends the updated UL split threshold to the UE via an RRC message 231. At block 232 the UE sends a confirmation to the 4G CU 141 that the connection configuration is complete. Alternatively, at block 233, the near-RT-RIC 160 sends updated UL split thresholds to the 4G DU 142, and at block 234, the 4G DU 142 sends the updated UL split threshold to the UE via a MAC CE message.

In the implementations above, if near-RT-RIC 160 observes high BSR (say for some time interval T, computed as average across the 4G and the 5G leg) for a split DRB but finds that the CU-UP data volume for that DRB is not that high, the near-RT-RIC 160 can reduces the value of UL split threshold for this DRB and communicates that to the 4G CU 141 and 5G CU 151. The 4G CU 141 uses RRC message to communicate this to the UE. This gives higher opportunity to the UE to split data for this DRB even at lower accumulated buffer volume and can potentially help improve UL data throughput for this UE. 3GPP allows a finite set of possible values for this UL split threshold. At each time above, the UL split threshold value is decremented by one (or higher number of) step(s). The near RT-RIC 160 is configured with a lower threshold and does not go below that.

In an implementation, the near-RT-RIC 160 also analyzes the UL PRB utilization for 4G / 5G DU 152 and identifies a leg where the corresponding scheduler can give UE higher opportunities for UL data transmission. The near-RT-RIC 160 selects one or more DUs (e.g., 4G DU 142 only, 5G DU 152 only, 4G DU 142 and 5G DU 152) which can send a UL data rate hint to UE. For example, it can select a DU with less UL PRB utilization, or it could select both the DUs if UL PRB utilization is low (or medium) in both the DUs. The near-RT-RIC 160 communicates this to the respective DUs and asks to communicate a recommended data rate to the UE. The selected DU(s) use Recommended Bit Rate MAC CE to communicate this recommended rate to the UE. With this, the UE can decide to split data to take advantage of this UL data communication opportunity. If the 4G leg 144 is underutilized and the 5G leg 154 is heavily utilized, the near-RT-RIC 160 decreases the UL split threshold for some DRBs to increase the chances that the respective UEs can start splitting data for those DRBs and utilize 4G leg 144 also more actively.

In another example embodiment, if the 4G leg 144 is getting overloaded (e.g. it has PRB utilization above a configured threshold such as, for example, above 80%) but the 5G leg is under-utilized, the near-RT-RIC 160 increases the UL split threshold of some DRBs to increase chances that some of these UEs will start using 5G leg only for the UL data transmission. If the UL split threshold is increased for some DRBs, the corresponding UEs can stop splitting these DRBs and send data over their primary path only (which is normally the 5G leg 154). This advantageously helps to reduce utilization of the 4G leg 144. For the same scenario, the near-RT-RIC 160 may also decrease the UL split threshold for some other DRBs to increase chances of UL splitting by the corresponding UEs and to help lower 4G utilization. For example, this can be done for UL DRBs which are using the 4G leg 144 more heavily than the 5G leg 154 and whose primary path is configured to be 4G (and not 5G). The process can be executed periodically and the period varied dynamically. For example, a shorter time period can be used when the cell is heavily loaded and use a longer time interval when the cell is lightly loaded. If the UL CU-UP data volume starts going up for a DRB and if this results in resource crunch in a DU (e.g. above a configured threshold such as above 80%) or packet drops at CU-UP, the near-RT-RIC 160 can increase the UL split bearer threshold, and communicates this to 4G-CU 141. The 4G CU 141 sends a RRC message231 to communicate the updated UL split threshold to the UE 101.

If the UL cell throughput of 4G as well as 5G cell is quite low (e.g.: below a threshold, such as, for example, less than 40%-50% of the theoretical peak throughput possible), the near-RT-RIC 160 decreases the UL split threshold for some DRBs. With this, the UE 101 gets more freedom to determine suitable access legs for its UL data, and this can help to increase performance of adaptive applications. If the UL cell throughput of the 5G cell is quite high (i.e., closer to the possible peak throughput) and the 4G cell is on the lower side, the near-RT-RIC 160 decreases the UL split threshold for some DRBs which were sending most of their data via the 5G leg. With this, the UE gets an opportunity to use the 4G leg 144 more actively for these DRBs (along with continued use of the 5G leg).

A number of the above-described mechanisms are also summarized in Table 1 below. Higher preference can be given to the mechanisms related to the PRB utilization in the 4G and 5G cells. The mechanisms related to PRB utilization are applied first to decide whether or not to adapt UL split threshold for some DRBs. For communication of the UL split threshold to the UE, the updated UL split threshold can also be communicated via an added MAC-CE 234 element. Communication of this threshold can also be communicated from the CU to the UE via RRC message 231, for example, as an alternative.

**Table 1**

| BSR _4G | BSR _5G | PRB_uti l _4G | PRB_uti l _5G | UL Cell Throughput _4G (compared to the possible peak throughput ) | UL Cell Throughput _5G (compared to the possible peak throughput ) | UL Data Volume (at CU-UP) | UL Split Bearer Threshold - Reduce / Decrease for some DRBs |
|---|---|---|---|---|---|---|---|
| H | H / M | M / L | M / L | -- | -- | M / L | Reduce (to increase chances of |
| H / M | H | M / L | M / L | -- | **--** | M / L | |
| | | | | | | | splitting by UE and to increase UL data volume) |
| H/M/ L | H/M/ L | L/M | H | -- | -- | -- | Reduce (to increase chances of splitting by UE and potentiall y reduce high PRB utilization in 5G) |
| M/L | H/M/ L | H | L/M | -- | -- | -- | Reduce for some DRBs (to increase chances of splitting by UE and potentiall y reduce high PRB utilization in 4G) |
| M/L | H/M/ L | H | L/M | -- | -- | -- | Increase for some DRBs (to reduce chances of splitting by UE and potentiall y have some UEs use 5G leg only for their DRBs) |
| -- | -- | H | M/L | -- | -- | High (or increasing ) | Decrease for some DRBs to |
| -- | -- | M/L | H | -- | -- | High (or increasing ) | help reduce resource crunch at DU/CU |
| -- | -- | -- | -- | L | L | -- | Decrease to improve chances of splitting across 4G and 5G cells |
| -- | -- | -- | -- | H | L/M | -- | Increase for some DRBs (to reduce chances of splitting by UE and potentiall y have some UEs use 5G leg only for their DRBs) |
| -- | -- | -- | -- | L | H | -- | Decrease to improve chances of splitting across 4G and 5G cells, and utilize 4G leg more effectively |

An example embodiment of optimization for UL Split Bearer Threshold for UL split RBs is illustrated in Table 2.

As in the previous implementations, initial values of threshold (i.e., ul-DataSplitThreshold) for each split DRB are taken. These threshold values are updated in semi-static (or dynamic) way as described below. The module to update these thresholds can be hosted at 5G CU-UP 151 in this implementation. The following parameters are communicated to the 5G CU-CP 151.

An average UL buffer measure for a given UE for 4G and 5G networks using the BSR (Buffer Status Report) is provided by the UE (BSR_5G_avg, BSR_4G_avg) as described in the previous implementations. Average BSR is computed periodically at 5G DU 152 for each UL split DRB (denoted as BSR_5G avg). This is also communicated to 5G CU-CP of the 5G CU 151 via F1-C. An object is added in the F1AP protocol running over the F1-C interface for this purpose. It will again be noted that F1AP is the control plane protocol running over the F1-C interface that is running between 5G CU-CP 151 and 5G DU.

Similarly, average of BSR is computed periodically at 4G DU 142 for each UL split DRB (denoted as BSR_4G avg). This is communicated from 4G DU 142 to 5G CU-CP via F1-C. The object that was added in the F1AP protocol running over the F1-C interface above is used for this purpose.

UL data volume at CU-UP for that DRB indicates the amount of UL data that UE was allowed to send towards CU-UP. UL resource allocation mechanisms at 4G DU 142 and 5G DU 152 influence this indirectly. CU-UP (CU-User Plane) sends data usage report per DRB per-UE to CU-CP (CU-Control Plane). This data usage report IE is standardized in 3GPP and is shown in Table 2 of Support Information 1A. This is used for reporting UL data volume from CU-UP to CU-CP for each UL split DRB.

A UL PRB utilization (for 4G DU 142 and 5G DU) parameter is also used. For the communication, 5G DU 152 communicates UL PRB utilization to 5G CU-CP (via F1-C), 4G DU 142 communicates UL PRB utilization to 5G CU-CP (via F1-C), or 4G DU 142 communicates this to 4G CU-CP, which communicates it to 5G CU-CP via X2. A suitable object is added in the F1AP protocol running over F1-C interface and X2AP protocol running over X2 interface for this purpose.

The parameters also include a UL Cell throughput for each cell. The 5G DU 152 communicates UL Cell throughput to 5G CU-CP (via F1-C). Here, the 4G DU 142 communicates UL cell throughput to 5G CU-CP (via F1-C), or 4G DU 142 communicates this to 4G CU-CP, which communicates it to 5G CU-CP via X2. A suitable object is added in the F1AP protocol running over F1-C and X2AP protocol running over X2 interface for this purpose.

The above identified implementation advantageous obtains several key performance measures at 5G CU-CP. A UL split DRB module at the CU-UP keeps analyzing these parameters and updates UL split threshold for select DRBs (as was done at near-RT-RIC 160 in the previous implementation). 5G CU-CP of the 5G CU 151 informs updated UL split thresholds to 4G CU 141 which communicates these to UEs 101 (as shown, for example, in Figure 16).

While the implementations herein are described for NSA / EN-DC architectures, implementations are also applicable for other type of MR-DC (Multi-RAT - Dual Connectivity) architectures.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

### Support Information from 3GPP Specifications

### Item 1A: UL data volume per bearer

**Table 2 Indication of UL data volume from CU-UP to CU-CP for an UL DRB**

| **IE/Group Name** | **Presence** | **Range** | **IE type and reference** | **Semantics description** | **Criticality** | **Assigned Criticality** |
|---|---|---|---|---|---|---|
| Data usage report Item | | 1.. <maxn oofDR B s> | | | - | - |
| >ORB ID | M | | 9.3.1.16 | | - | - |
| > RAT Type | M | | ENUMERA TED (NR, ...) | | - | - |
| >ORB Usage Report List | | 1 | | | - | - |
| >>DRB Usage Report Item | | 1.. <maxn ooftim e period s > | | | - | - |
| >>>Start timestamp | M | | OCTET STRING (SIZE(4)) | Encoded in the same format as the first four octets of the 64-bit timestamp formal as | - | - |
| | | | | defined in section 6 of IETF RFC 5905 [14].II indicates the UTC time when the recording of the Data Volume was started. | | |
| >>>End timestamp | M | | OCTET STRING (SIZE(4)) | Encoded in the same format as the first four octets of the 64-bit timestamp format as defined in section 6 of IETF RFC 5905 (14].It indicates the UTC lime when the recording of the Data Volume was ended_ | - | - |
| >>>Usage count UL | M | | INTEGER (0..2⁶⁴-1) | The unit is: octets. | - | - |
| >>>Usage count DL | M | | INTEGER (0 _264. 1) | The unit is: octets. | - | - |

### Item IB: BSR (Buffer Status Report)

BSR is sent from UE to base station. It indicates how much data is buffered in the UE for uplink communication towards base station.

BSR is a MAC layer Control Element (MAC-CE).

BSR in 4G/LTE Networks (Reference: 3GPP TS 36.321*)*

There are three formats for BSR in the 4G/LTE networks: Short BSR, Long BSR and Truncated BSR.
- LCG ID identifies group of logical channels for which BSR is being reports from UE to 4G bae station. As indicated earlier, DRB (Data Radio Bearers) in RAN map to a Logical Channels at the RLC level.
- Short BSR for 4G networks: One LCG ID (Logical Channel Group ID) and one buffer size field as in the tables below. If UE uses Short BSR, it indicates to the 4G eNodeB that only one LCG-ID for that UE has data to send in the uplink direction. Other LCG IDs do not have uplink data to send.
- Long BSR: Four buffer size fields corresponding to LCG IDs 0 to 3 as in the figure below.

If more than one LCG IDs from the UE have uplink data to send and if UE cannot include Long BSR in the MAC PDU, it uses Truncated BSR. If eNodeB received Truncated BSR (for a LCG ID), it knows that other LCG IDs from that UE also have data to send in the uplink direction.

Table 3.1 and Table 3.2 show a Buffer Status Report (sent from UE to LTE base station) in 4G networks in accord with 3GPP 36.321 (V17.4.0 2023-03-29).

**Table 3.1**

| | | | | | | | | |
|---|---|---|---|---|---|---|---|---|
| | | | | | | | | |
| | | | | | | | | |
| LGC ID | | Buffer Size | | | | | | Oct 1 |

**Table 3.2**

| | | | | | | | | |
|---|---|---|---|---|---|---|---|---|
| | | | | | | | | |
| | | | | | | | | |
| Buffer Size #0 | | | | | | Buffer Size 1 | | Oct 1 |
| Buffer Size 1 | | | | Buffer Size 2 | | | | Oct 2 |
| Buffer Size 2 | | Buffer Size 3 | | | | | | Oct 3 |

Logical Channel Group is signaled with LogicalChannelConfig of each radio bearer. The mapping of a radio bearer (or logical channel) to a LCG is done at the time when the radio bearer is setup by the eNodeB.

Table 3.3 shows a Buffer Status Report (sent from UE to LTE base station) in accord with 3GPP 36.321(V17.4.0) with Buffer size levels for BSR in 5G networks.

**Table 3.3 Buffer size levels for BSR**

| **Index** | **Buffer Size (BS) value [bytes)** | **Index** | **Buffer Size (BS) value [bytes)** |
|---|---|---|---|
| 0 | BS= 0 | 32 | 1132 <BS<= 1326 |
| 1 | 0 <BS<= 10 | 33 | 1326 <BS<= 1552 |
| 2 | 10 <BS<= 12 | 34 | 1552 <BS<= 1817 |
| 3 | 12 <BS<= 14 | 35 | 1817 <BS<= 2127 |
| 4 | 14 <BS<= 17 | 36 | 2127 <BS<= 2490 |
| 5 | 17 <BS<= 19 | 37 | 2490 < BS <= 2915 |
| 6 | 19 <BS<= 22 | 38 | 2915 <BS<= 3413 |
| 7 | 22 <BS<= 26 | 39 | 3413 <BS<= 3995 |

The gNB 106 configures BSR parameters to UE with BSR-Config using RRC signaling.

There are four BSR formats for 5G networks - Short BSR, Short Truncated BSR, Long BSR and Long Truncated BSR. Table 3.4 and Table 3.5 BSR formats for 5G networks are in accord with 3GPP TS 38.321 (V17.4.0, 2023-03-29 (VC ).

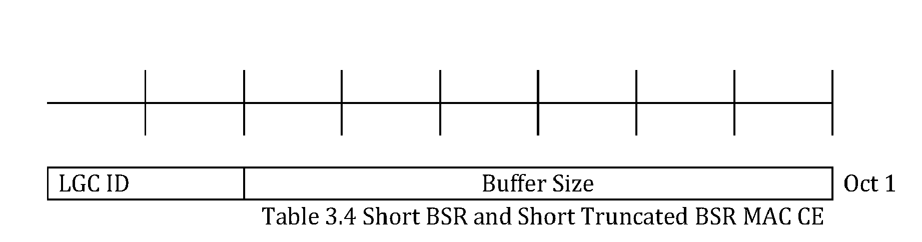

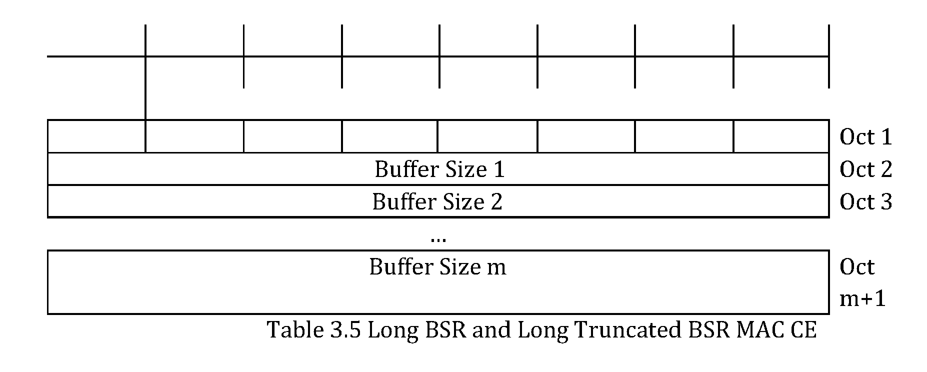

As explained in from 3GPP TS 38.321 (V17.4.0):

The fields in the BS MAC CE are defined as follows:
- LCG ID: The Logical Channel Group ID field identifies the group of logical channel(s) whose buffer status is being reported. The length of the field is 3 bits.
- LCG: For the Long BSR format, this field indicates the presence of the Buffer Size field for the logical channel group i. The LCG field set to "1" indicates that the Buffer Size filed forth e logical channel group 1 is reported. The LCGi field set to "0" indicates that the Buffer Size filed for the logical channel group 1 is not reported. For the Long Truncated BSR format, this field indicates whether the logical channel group 1 has data available. The LCGi field set to "1" indicates whether logical channel group has data available. The LCGi field set to "0" indicates that the logical channel group 1 does not have data available.

Item 1C is standardized 5QI / QCI to QoS characteristics mapping. Table 4 shows a subset of a 5QI table in accord with 3GPP 23.501 (V18.1.0, 2023-04-05)

**Table 4**

| **5QI Value** | **Resou rce Type** | **Defa ult Prio rity Leve l** | **Packe t Delay Budge t** | **Pac ket Err or Rat e** | **Default Maxim um Data Burst Volume** | **Default Averagin g Window** | **Example Services** |
|---|---|---|---|---|---|---|---|
| | | | **(NOT E 3)** | | | | |
| | | | | | **(NOTE 21)** | | |
| 1 | GBR | 20 | 100 ms | 10-2 | NIA | 2000ms | Conversationa l Voice |
| | (NOT E 1) | | | | | | |
| | | | (NOTE **11**, | | | | |
| | | | NOTE 13) | | | | |
| 2 | | 40 | 150 ms | 10-J | **NIA** | 2000 ms | Conversationa l Video (Live Streaming) |
| | | | (NOTE **11**, | | | | |
| | | | NOTE 13) | | | | |
| 3 | | 30 | 50 ms | 10-3 | **NIA** | 2000ms | Real Time Gaming, |
| | | | (NOTE | | | | |
| | | | **11,** | | | | V2X messages (see |
| | | | NOTE 13) | | | | |
| | | | | | | | TS 23.287 [1211). |
| | | | | | | | Electricity distribution |
| | | | | | | | - medium voltage, |
| | | | | | | | Process automation |
| | | | | | | | monitoring |
| **4** | | 50 | 300 ms | 10-() | **NIA** | 2000 ms | Non-Conversationa l Video (Buffered |
| | | | (NOTE **11**, | | | | |
| | | | NOTE 13\ | | | | Streaming) |
| 65 | | 7 | 75 ms | 10-2 | **NIA** | 2000 ms | Mission Critical user |
| (NOTE 9, | | | (NOTE 7, | | | | |
| | | | | | | | plane Push To Talk |
| NOTE 12) | | | NOTE 8) | | | | voice Ce.a. MCPTT) |
| 66 | | 20 | 100 ms | 10-2 | **NIA** | 2000 ms | Non-Mission-Critical |
| (NOTE 12) | | | | | | | |
| | | | (NOTE 10, | | | | user plane Push To |
| | | | NOTE 13\ | | | | Talk voice |
| 67 | | 15 | 100 ms | 10-J | **NIA** | 2000ms | Mission Critical Video user plane |
| (NOTE 12) | | | | | | | |
| | | | (NOTE 10, | | | | |
| 75 | | | | | | | |
| | | | NOTE 13) | | | | |
| (NOTE 14) | | | | | | | |
| 71 | | 56 | 150 ms | 10-() | **NIA** | 2000ms | "Live" Uplink Streaming (e.g. |
| | | | (NOTE **11**, | | | | |
| | | | | | | | TS 26.238 (761) |
| | | | NOTE 13, | | | | |
| | | | NOTE 15) | | | | |
| 72 | | 56 | 300 ms | 10-4 | **NIA** | 2000 ms | "Live" Uplink Streaming (e.g. |
| | | | (NOTE **11,** | | | | |
| | | | | | | | TS 26.238 [761) |
| | | | NOTE 13, | | | | |
| | | | NOTE 15) | | | | |
| 73 | | 56 | 300 ms | 10 | **NIA** | 2000ms | "Live" Uplink Streaming (e.g. |
| | | | (NOTE **11.** | | | | |
| | | | | | | | TS 26.238 [761) |
| | | | NOTE 13, | | | | |
| | | | NOTE 15) | | | | |
| 74 | | 56 | | 10 | **NIA** | 2000ms | |
| | | | 500 ms | | | | "Live" Uplink Streaming (e.g. |
| | | | (NOTE **11,** | | | | |
| | | | | | | | TS 26.238 1761) |
| | | | NOTE 15) | | | | |
| 76 | | 56 | 500 ms | 10-4 | **NIA** | 2000 ms | "Live" Uplink |
| | | | (NOTE **11,** | | | | Streaming (e.g. |
| | | | | | | | TS 26.238 (761) |
| | | | NOTE 13, | | | | |
| | | | NOTE 15) | | | | |
| 5 | Non-GBR | 10 | 100 ms | 10-() | **NIA** | **NIA** | IMS Signaling |
| | (NOT E **1)** | | NOTE 10, | | | | |
| | | | NOTE 13\ | | | | |
| 6 | | 60 | 300 ms | 10-() | **NIA** | **NIA** | Video (Buffered Streaming) |
| | | | (NOTE 10, | | | | TCP-based (e.g., |
| | | | NOTE 13) | | | | www, e-mail, chat, ftp, |
| | | | | | | | p2p file sharing, |
| | | | | | | | progressive video, |
| | | | | | | | etc.) |
| 7 | | 70 | 100 ms | 10-J | **NIA** | **NIA** | Voice, |
| | | | | | | | Video (Live Streaming) |
| | | | (NOTE 10, | | | | |
| | | | NOTE 13) | | | | Interactive Gaming |

Table 4 shows a subset of a 5QI table in accord with 3GPP 23.501.

QCI (QoS Class Identifier) to QoS characteristics mapping used in the LTE networks is given in 3GPP TS 23.203 (V17.2.0).

## Claims

1. A method comprising
taking initial values for a UL split threshold for a 4G leg (144) and 5G leg (154) for a number of split Data Radio Bearers (DRBs), wherein UL split threshold parameters comprise:
an average UL buffer measure for a UE (101)using a Buffer Status Report (BSR) provided by the UE (101);
a UL data volume at a CU-UP (151) for a DRB of the number of split DRBs;
a UL PRB utilization;
a UL Cell throughput for each UL cell;
subscribing to the UL split threshold parameters from an gNB (106) or eNB E2 node by a near-RT RIC (160);
detecting, by the E2 node, an RIC event trigger;
analyzing the parameters, by the near-RT RIC (160), to determine whether to change the values of UL split threshold parameters for some of the number of UL split DRBs, and if so;
updating the UL split threshold parameters at the E2 node; and
communicating the updated UL split threshold parameters to the UE (101).

2. The method according to claim 1, **characterized in that**,
computing the average UL buffer measure with the BSR for a UE (101) periodically at a 5G DU (152) for each UL split; and
computing the average UL buffer measure with the BSR for a UE (101) periodically at a 4G DU (142) for each UL split DRB.

3. The method according to claims 1 or 2, **characterized in that**:
communicating the periodically computed the average UL buffer measure for the UE (101) at the 5G DU (152) for each UL split to a 5G CU-CP via an F1-C interface; and
communicating the periodically computed the average UL buffer measure for the UE (101) at the 4G DU (142) for each UL split to the 5G CU-CP (151) via an F1-C interface.

4. The method according to any one of the above claims, **characterized in that**:
computing the BSR for a corresponding Logical Channel Group ID (LCG ID) in the 4G network and the 5G network;
wherein the 4G DU (142) and the 5G DU (152) each identify the BSR in a buffer size field of the corresponding LCG ID.

5. The method of according to any one of the above claims, **characterized in that**:
mapping each of a BSR index (k) to a buffer size in a range (b1,b2] in bytes; and
computing the lower value of the range; or
computing an average of the range (average of b1+1 and b2) while computing average BSR.

6. The method according to any one of the above claims, **characterized in that**:
informing, by the UE (101), the BSR for the 4G leg (144) and 5G leg (154) to the respective 4G DU (142) and SGU;
computing the average BSR at the 4GDU (142) and 5G DU (152) or communicating the BSR to a near-RT-RIC (160) and computing the average BSR at the near-RT-RIC (160).

7. The method according to any one of the above claims, **characterized in that** an E2 protocol message includes an object for communicating the parameters from the 4G DU (142) and the 5G DU (152) to the near-RT-RIC.

8. The method of claim 2, wherein the analyzing the parameters, by the near-RT RIC (160), to determine whether to dynamically change the values of UL split threshold parameters for some of the number of UL split DRBs comprises:
determining if a BSR average across the 4G leg (144) and the 5G leg (154) for the split DRB for a time interval is above a configured threshold and is high;
determining if a CU-UP (151) data volumes for the split DRB is below a configured threshold; and
reducing the value of the UL split threshold for the DRB and communicating the reduced value to the 4G CU (141) and the 5G CU (151).

9. The method of claim 8, further comprising:
communicating, by the 4G CU (141), the reduced value to the UE (101).

10. The method of claim 2, further comprising:
analyzing, by the near-RT-RIC (160), the UL PRB utilization for 4G DU (142) and the 5G DU (152) and identifies the 5G leg (154) or 4G leg (144) where a corresponding scheduler can give the UE (101)optimal UL data transmission.

11. The method of claim 2, further comprising:
increasing, by the near-RT RIC (160), the UL cell throughput when a UL CU-UP (151) data volume starts going up for a DRB or a packet drops at CU-UP (151) for UL cell throughput; or
increasing, by the near-RT RIC (160), the UL cell throughput when a UL CU-UP (151) data volume starts going up for a DRB or a packet drops at CU-UP (151) for UL cell throughput.

12. The method of claim 11, further comprising:
communicating the increased UL cell throughput to a 4G CU (141), and
communicating, by the 4G CU (141), the updated UL split threshold to the UE (101).

13. The method of claim according to any one of the above claims, **characterized in that**:
decreasing, by the near-RT-RIC (160), the UL split threshold for some DRBs when both a UL cell throughput of a 4G cell and a 5G cell is below a configured threshold; or
decreasing, by the near-RT-RIC (160), the UL split threshold for some DRBs that were sending most of their data via the 5G leg (154) when a UL cell throughput of a 5G UL cell throughput is above a configured threshold and is high and the throughput of 4G UL cell throughput is below a configured threshold and is low.

14. A method comprising
taking initial values for a UL split threshold for a 4G and 5G leg (154) for a number of split Data Radio Bearers (DRBs), wherein UL split threshold parameters comprise one or more of:
an average UL buffer measure for a UE (101) using a Buffer Status Report (BSR) provided by the UE;
a UL data volume at a CU-UP (151) for a DRB of the number of split DRBs;
a UL PRB utilization; and
a UL Cell throughput for each UL cell;
communicating the UL split threshold parameters to a 5G CU (151);
analyzing the parameters, by the 5G CU (151), to determine whether to change the values of UL split threshold parameters for some of the number of UL split DRBs, and if so;
updating the UL split threshold parameters at the 5G CU (151); and
communicating the updated UL split threshold parameters to the UE (101).

15. The method according to claim 14, **characterized in that**:
computing the average UL buffer measure with the BSR for a UE (101) periodically at a 5G DU (152) for each UL split; and
computing the average UL buffer measure with the BSR for a UE (101) periodically at a 4G DU (142) for each UL split DRB;
communicating the periodically computed the average UL buffer measure for the UE (101) at the 5G DU (152) for each UL split to a 5G CU-CP (151) via an F1-C interface; and
communicating the periodically computed the average UL buffer measure for the UE (101) at the 4G DU (142) for each UL split to the 5G CU-CP via an F1-C interface.
